# EUROPEAN PATENT APPLICATION

(11) **EP 3 734 928 A1**
(43) Date of publication of application: **04.11.2020**
(21) Application number: 18910769.1
(22) Date of filing: 23.03.2018
(51) Int. Cl.: H04L 29/06

(54) **METHOD FOR VIRTUAL MACHINE TO ACCESS REMOTE ACCELERATION DEVICE, AND SYSTEM**

(71) Applicant: HUAWEI TECHNOLOGIES CO., LTD., Shenzhen, Guangdong 518129, (CN)
(72) Inventor: SU, Dexian, Shenzhen, Guangdong 518129 (CN)
(74) Representative: Epping - Hermann - Fischer
(86) International application number: PCT/CN2018/080290
(87) International publication number: WO 2019/178855

(57) **Abstract**

Embodiments of this application provide a method for accessing a remote acceleration device by a virtual machine, and a system. When a virtual machine accesses a resource rented by the virtual machine from a remote acceleration system, the virtual machine does not communicate with the remote acceleration system by using a network, but converts a processing command and an identifier of the acceleration resource in a resource invocation instruction into an access request for a virtual device file on the virtual machine, and then sends the access request to an access agent module on a physical host. The access agent module on the physical host sends information about the to-be-accessed remote acceleration resource to the remote acceleration system. In this way, network isolation between different virtual machines can be implemented, reducing network management load caused due to that in a public cloud scenario, a network on which a virtual machine runs is different from a network on which an acceleration resource runs, and reducing a network security risk of the virtual machines.

## Description

### TECHNICAL FIELD

This application relates to the field of computer technologies, and in particular, to a method for accessing a remote acceleration device by a virtual machine, and a system.

### BACKGROUND

With development of virtualization and cloud computing, a physical host virtualizes a hardware resource, and a virtual machine (Virtual Machine, VM) is deployed on the physical host, so that a growing quantity of services are migrated onto the virtual machine. With explosive growth of customer applications and data, a requirement for a computing capability is higher, and a computing capability of a general central processing unit (Central Processing Unit, CPU) already cannot satisfy a requirement of current rapid service development for high-performance computing. Therefore, heterogeneous computing that can economically and effectively obtain a high-performance computing capability and that has good scalability, high computing resource utilization, and huge development potential comes into being. A function of a graphics processing unit (Graphics Processing Unit, GPU) is no longer limited to image processing, and is developed into a highly parallel processor that has a high computing peak value and high memory bandwidth, to accelerate computing and improve a service computing capability.

Currently, remotely deploying an acceleration resource, such as a GPU resource, used for improving a service computing capability of a tenant, to support various GPU applications of a virtual machine becomes a new development direction. In a public cloud scenario, a network on which a client runs is different from a network on which an acceleration resource runs. For example, in a public cloud scenario in which a GPU resource is remotely deployed, a network on which a virtual machine runs is a public network, and a network on which an acceleration resource runs is a private network. As there are a growing quantity of tenants at a remote end, if the tenants directly access an acceleration resource network, network management is complex, and a security risk is increased. Therefore, how to reduce network management load in the public cloud scenario and reduce the security risk becomes an urgent problem to be resolved.

### SUMMARY

This application discloses a method for accessing a remote acceleration device by a virtual machine, an apparatus, and a cloud computing system, implementing network isolation between different virtual machines that communicate with a remote acceleration system, and reducing a network security risk of the virtual machines.

According to a first aspect, an embodiment of this application provides a method for accessing a remote acceleration device by a virtual machine. The virtual machine is deployed on a physical host, and an access agent module is further deployed on the physical host. The method includes: obtaining, by the virtual machine, a resource invocation instruction for accessing the remote acceleration device; converting, by the virtual machine, the resource invocation instruction into an access request for a virtual device file on the virtual machine; transmitting, by the virtual machine, the access request to the access agent module; and sending, by the access agent module, the access request to the remote acceleration device by using a communication connection between the access agent module and the remote acceleration device.

In the method for accessing a remote acceleration device by a virtual machine according to this embodiment of this application, the access agent module is deployed on the physical host. When accessing an acceleration resource rented by the virtual machine from a remote acceleration system, the virtual machine converts the resource invocation instruction for accessing the remote acceleration device into the access request for the virtual device file on the virtual machine, and transmits the access request to the access agent module. The access agent module sends the access request to the remote acceleration device by using the communication connection between the access agent module and the remote acceleration device. In the method, the virtual machine does not communicate with the remote acceleration system by using a network, but converts the resource invocation instruction for the to-be-accessed remote acceleration resource into the access request for the virtual device file on the virtual machine, and then transmits the access request to the access agent module on the physical host. The access agent module on the physical host sends the access request to the remote acceleration system. The access agent module on the physical host acts as an agent of the virtual machine to communicate with the remote acceleration system, to implement accelerated processing of a virtual machine service. In this way, network isolation between a plurality of virtual machines can be implemented, reducing network management load caused due to that in a public cloud scenario, a network on which a virtual machine runs is different from a network on which an acceleration resource runs, and reducing a network security risk of the virtual machines.

With reference to the first aspect, in a first implementation, before the obtaining, by the virtual machine, a resource invocation instruction, the method further includes: sending, by the virtual machine, a resource configuration request for the remote acceleration device; obtaining, by the access agent module, a response message of the resource configuration request, where the response message carries information about the remote acceleration device allocated by a remote resource system, and the information about the remote acceleration device includes an identifier and network connection information of the remote acceleration device; and determining, by the virtual machine, whether the remote acceleration device has been allocated to the virtual machine, and creating the virtual device file if the remote acceleration device has been allocated to the virtual machine, where the virtual device file is corresponding to the remote acceleration device.

With reference to the first implementation of the first aspect, in a second implementation, the determining, by the virtual machine, whether the remote acceleration device has been allocated to the virtual machine includes: periodically initiating, by the virtual machine, a query to the access agent module, to determine whether the remote acceleration device has been allocated to the virtual machine; or after obtaining the response message of the resource configuration request, notifying, by the access agent module, the virtual machine that the remote acceleration device has been allocated.

With reference to the first or the second implementation of the first aspect, in a third implementation, before the obtaining, by the virtual machine, a resource invocation instruction, the method further includes: sending, by the virtual machine, a channel establishment instruction to the access agent module; and after receiving the channel establishment instruction, establishing, by the access agent module, the communication connection between the access agent module and the remote acceleration device based on the network connection information of the remote acceleration device.

With reference to any one of the first aspect or the first to the third implementations of the first aspect, in a fourth implementation, before the obtaining, by the virtual machine, a resource invocation instruction, the method further includes: establishing, by the virtual machine, a communication connection to the access agent module.

With reference to the fourth implementation of the first aspect, in a fifth implementation, the establishing, by the virtual machine, a communication connection to the access agent module includes: obtaining a part of storage space on the physical host, where the storage space is shared by the virtual machine and the access agent module; and the transmitting, by the virtual machine, the access request to the access agent module includes: writing, by the virtual machine, the access request into the storage space, where the access agent module reads the access request from the storage space.

According to a second aspect, a computer system is provided. The computer system includes a virtual machine and an access agent module, and the virtual machine and the access agent module are deployed on a physical host. The virtual machine is deployed on the physical host, and the access agent module is further deployed on the physical host. The virtual machine is configured to: obtain a resource invocation instruction for a remote acceleration device, convert the resource invocation instruction into an access request for a virtual device file on the virtual machine, and transmit the access request to the access agent module; and the access agent module is configured to send the access request to the remote acceleration device by using a communication connection between the access agent module and the remote acceleration device.

With reference to the second aspect, in a first implementation, the virtual machine is further configured to send a resource configuration request for the remote acceleration device; the access agent module is further configured to obtain a response message of the resource configuration request, where the response message carries information about the remote acceleration device allocated by a remote acceleration system, and the information about the remote acceleration device includes an identifier and network connection information of the remote acceleration device; and the virtual machine is further configured to: determine whether the remote acceleration device has been allocated to the virtual machine, and create the virtual device file if the remote acceleration device has been allocated to the virtual machine, where the virtual device file is corresponding to the remote acceleration device.

With reference to the first implementation of the second aspect, in a second implementation, the virtual machine is further configured to periodically initiate a query to the access agent module, to determine whether the remote acceleration device has been allocated to the virtual machine.

With reference to the first implementation of the second aspect, in a third implementation, the access agent module is further configured to: after obtaining the response message of the resource configuration request, notify the virtual machine that the remote acceleration device has been allocated.

With reference to the second or the third implementation of the second aspect, in a fourth implementation, the virtual machine is further configured to send a channel establishment instruction to the access agent module; and the access agent module is further configured to: after receiving the channel establishment instruction, establish the communication connection between the access agent module and the remote acceleration device based on the network connection information of the remote acceleration device.

With reference to any one of the second aspect or the first to the fourth implementations of the second aspect, in a fifth implementation, the virtual machine is further configured to establish a communication connection between the virtual machine and the access agent module.

With reference to the fifth implementation of the second aspect, in a sixth implementation, the virtual machine is further configured to obtain a part of storage space on the physical host, where the storage space is shared by the virtual machine and the access agent module; the virtual machine is further configured to write, by the virtual machine, the access request into the storage space; and the access agent module is further configured to read the access request from the storage space.

According to a third aspect, a computer readable storage medium is provided, where the computer readable storage medium stores a computer program instruction, and when the computer program instruction runs on a computer, the computer performs any method according to the first aspect.

In the method for accessing a remote acceleration device by a virtual machine according to embodiments of this application, when the virtual machine accesses the acceleration resource rented by the virtual machine from the remote acceleration system, the virtual machine does not communicate with the remote acceleration system by using a network, but sends the information (such as the processing command and an identifier of the acceleration resource) about the to-be-accessed remote acceleration resource to the physical host. The physical host sends the information about the to-be-accessed remote acceleration resource to the remote acceleration system. In this way, network isolation between a plurality of virtual machines can be remotely implemented, reducing network management load caused due to that in a public cloud scenario, a network on which a virtual machine runs is different from a network on which an acceleration resource runs, and reducing a network security risk of the virtual machines.

### BRIEF DESCRIPTION OF DRAWINGS

FIG. 1a is a schematic structural diagram of a cloud computing system 100 according to an embodiment of this application;
FIG. 1b is another schematic structural diagram of a cloud computing system 100 according to an embodiment of this application; and
FIG. 2 is a schematic flowchart of a method for accessing a remote acceleration device by a virtual machine according to an embodiment of this application.

### DESCRIPTION OF EMBODIMENTS

The following describes the technical solutions in this application with reference to the accompanying drawings.

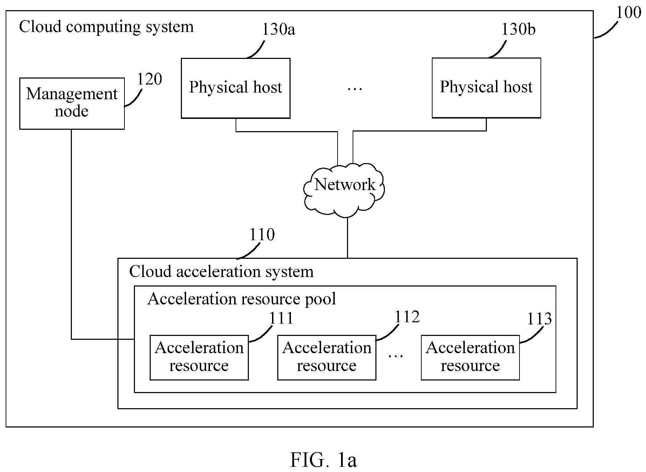

FIG. 1a is a schematic structural diagram of a cloud computing system 100 according to an embodiment of this application. The cloud computing system 100 includes a remote acceleration system 110, a management node 120, and at least one physical host, such as a physical host 130a and a physical host 130b. In the cloud computing system 100, the management node 120 is configured to manage an acceleration resource deployed in the remote acceleration system 110. The physical host uses a network adapter of the physical host to communicate with the remote acceleration system 110 by using a network. The physical host virtualizes a hardware resource of the physical host, and creates at least one or more virtual machines. The one or more virtual machines deployed on the physical host may rent the acceleration resource deployed in the remote acceleration system 110. The remote acceleration system 110 is configured to provide an acceleration resource to a virtual machine, to perform, by using the acceleration resource, accelerated processing on a virtual machine service on which the accelerated processing is to be performed.

As a host machine of the virtual machine deployed on the physical host, the physical host has a host operating system running inside the physical host. In the cloud computing system 100 shown in FIG. 1a, the physical host may be a computing device such as a server, a computer, or a communications terminal. Another operating system independent of the host operating system runs on each virtual machine deployed on the physical host. Each virtual machine is equivalent to a small computer.

An acceleration resource pool is deployed in the remote acceleration system 110. The acceleration resource pool includes several acceleration resources, such as an acceleration resource 111, an acceleration resource 112, and an acceleration resource 113 shown in FIG. 1a. In the remote acceleration system 110, the acceleration resources may be physical acceleration resources, or may be virtual acceleration resources. A physical acceleration resource may be a hardware acceleration apparatus deployed in the remote acceleration system 110. A virtual acceleration resource may be a virtualized acceleration resource that is created after the remote acceleration system 110 or the management node 120 virtualizes a hardware acceleration resource.

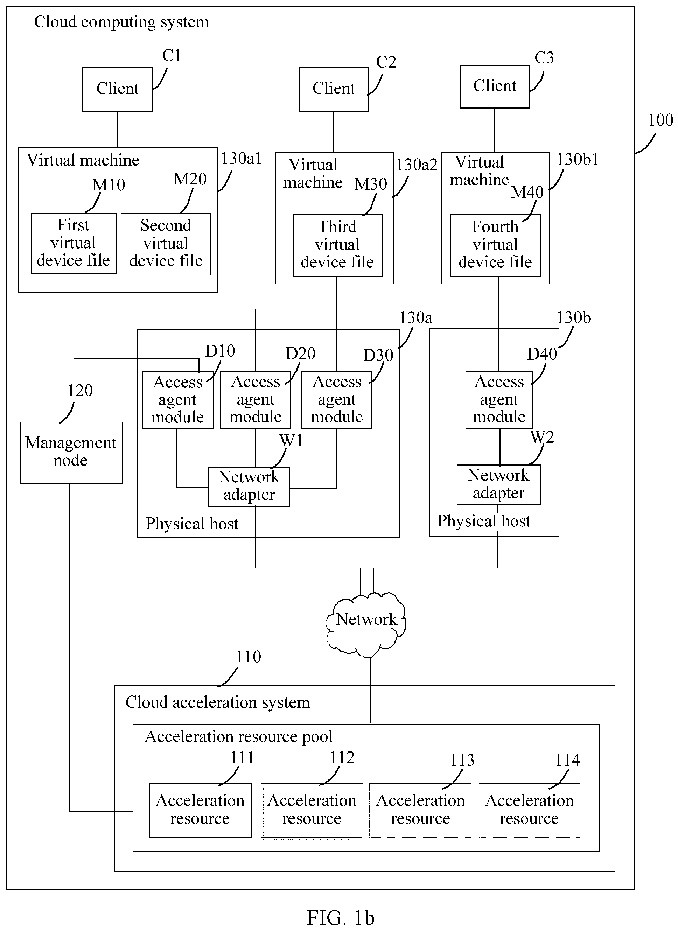

In this application, an acceleration resource in the remote acceleration system may also be referred to as a remote acceleration device. The remote acceleration device may include several hardware acceleration apparatuses. The hardware acceleration apparatus may be implemented by using an apparatus including but not limited to a graphics processing unit (Graphics Processing Unit, GPU), a field-programmable gate array (Field-Programmable Gate Array, FPGA), a special customized chip (ASIC Application Specific Integrated Circuit, ASIC), or the like. The remote acceleration device may alternatively be a virtual device obtained after a hardware device is virtualized. FIG. 1b is another schematic structural diagram of the cloud computing system 100 according to an embodiment of this application. As shown in FIG. 1b, before a user accesses a remote acceleration device by using a virtual machine, the user uses a client, such as a client C1, a client C2, or a client C3 that has a one-to-one correspondence with a virtual machine 130a1, a virtual machine 130a2, or a virtual machine 130b, to initiate in advance an application to the management node 120 for configuring an acceleration resource of a to-be-accessed remote acceleration device of the virtual machine. The management node 120 virtualizes remote acceleration resources, and configures at least some remotely deployed acceleration resources for the virtual machine to use. The client may be a client deployed on a virtual machine or another physical host, and may be specifically application management software deployed on the virtual machine or the another physical host. For example, during specific implementation, the user enters, on the client deployed on the virtual machine, a type and a quantity of acceleration resources that the user of the virtual machine needs to rent, and the virtual machine sends a resource configuration request for the remote acceleration device to the management node 120. After receiving the resource configuration request for acceleration resources that includes the type and the quantity of acceleration resources and that is sent by the client, the management node 120 sends the resource configuration request to the remote acceleration system 110. The remote acceleration system 110 configures, for the virtual machine, an acceleration resource corresponding to the type and the quantity of acceleration resources. After the remote acceleration system 110 configures, for the virtual machine, the acceleration resource corresponding to the type and the quantity of acceleration resources, the management node 120 maps, to the virtual machine, the acceleration resource configured for the virtual machine by the remote acceleration system 110.

When the management node 120 maps, to the virtual machine, the acceleration resource configured for the virtual machine by the remote acceleration system 110, the management node 120 sends a response message of the resource configuration request to a physical host on which the virtual machine is located. An access agent module on the physical host obtains the response message of the resource configuration request. The response message carries information about the remote acceleration device that is sent by the remote acceleration system 110 to the virtual machine in response to the resource configuration request sent by the virtual machine. The information about the remote acceleration device includes an identifier and network connection information of the to-be-accessed remote acceleration device. The identifier of the remote acceleration device may include identifiers respectively corresponding to several hardware acceleration apparatuses. The several hardware acceleration apparatuses are acceleration resources configured for the virtual machine by the remote acceleration system 110 in response to the resource configuration request sent by the virtual machine. After the physical host obtains the response message of the resource configuration request, the virtual machine determines whether the remote acceleration device has been allocated to the virtual machine, and creates a virtual device file if the remote acceleration device has been allocated to the virtual machine, where the virtual device file is corresponding to the remote acceleration device. That the virtual machine determines whether the remote acceleration device has been allocated to the virtual machine includes: periodically initiating, by the virtual machine, a query to the access agent module on the physical host, to determine whether the remote acceleration device has been allocated to the virtual machine; or after obtaining the response message of the resource configuration request, notifying, by the access agent module on the physical host, the virtual machine that the remote acceleration device has been allocated.

If a virtual machine has a requirement for accessing a remote acceleration resource, the virtual machine sends a channel establishment instruction to the access agent module, and the virtual machine establishes a communication connection to the access agent module. After receiving the channel establishment instruction, the access agent module establishes a communication connection between the access agent module and the remote acceleration device based on the network connection information of the remote acceleration device. In this implementation, that the virtual machine establishes a communication connection to the access agent module includes: obtaining, by the virtual machine, a part of storage space on the physical host, where the storage space is shared by the virtual machine and the access agent module. In an implementation, the storage space may be storage space that is corresponding to an acceleration resource predefined and mapped between the virtual machine and the physical host. The virtual device file created by the virtual machine may be used to store a correspondence between an identifier of the acceleration resource and the storage space. The virtual machine may store a correspondence between the identifier of the acceleration resource and the virtual device file, so that when the correspondence between the identifier of the acceleration resource and the storage space is to be subsequently used, the virtual device file can be found based on the correspondence between the identifier of the acceleration resource and the virtual device file, and the correspondence between the identifier of the acceleration resource and the storage space can be found. In this implementation, the correspondence between the identifier of the acceleration resource and the storage space may be a correspondence between the identifier of the acceleration resource and an address of the storage space.

When a virtual machine accesses a remote acceleration resource, the virtual machine obtains a resource invocation instruction for the remote acceleration device. The resource invocation instruction includes an identifier of a to-be-accessed acceleration resource determined by the virtual machine in several acceleration resources rented from the remote acceleration system 110 and a processing command. The identifier of the to-be-accessed acceleration resource includes the identifier of the to-be-accessed remote acceleration device. The virtual machine converts the resource invocation instruction into an access request for a virtual device file on the virtual machine. As shown in FIG. 1b, each virtual machine includes a virtual device file that is of a remote acceleration device and that is corresponding to the remote acceleration device. For example, the virtual machine 130a1 includes a first virtual device file M10 corresponding to the acceleration resource 111. The virtual device file is used to map the acceleration resource that is rented by the virtual machine and that is deployed in the remote acceleration system 110 to a local acceleration resource. In this way, after obtaining the resource invocation instruction for the remote acceleration device, the virtual machine converts the resource invocation instruction into an access request for the virtual device file on the virtual machine, to access the local acceleration resource on the virtual machine to which the acceleration resource in the access remote acceleration system 110 is mapped.

The virtual machine transmits the access request to the access agent module on the physical host. The access agent module on the physical host sends the access request to the remote acceleration device by using a communication connection between the access agent module and the remote acceleration device. The access request includes the identifier of the to-be-accessed acceleration resource determined by the virtual machine in the several acceleration resources rented from the remote acceleration system 110, and the processing command. Specifically, as shown in FIG. 1b, each physical host includes a network adapter, and an access agent module corresponding to the remote acceleration device is deployed on each physical host. For example, the physical host 130a on which the virtual machine 130a1 is located includes a network adapter W1 and an access agent module D10 corresponding to the acceleration resource 111. The access agent module is configured to act as an agent of the virtual machine to access an acceleration resource that is rented by the virtual machine and that is deployed in the remote acceleration system 110. The access agent module sends the processing command and the identifier of the acceleration resource to the remote acceleration system 110 by using the network adapter of the physical host. The remote acceleration system 110 sends the identifier of the acceleration resource and the processing command to the physical host. The physical host acts as an agent of the virtual machine to send the identifier of the acceleration resource and the processing command to the remote acceleration system 110. After receiving the identifier of the acceleration resource and the processing command in the access request, the remote acceleration system 110 instructs the acceleration resource corresponding to the identifier of the acceleration resource to execute the processing command, to provide an accelerated computing service to the virtual machine by using the acceleration resource rented by the user. The remote acceleration system 110 returns, by using a network between the remote acceleration system 110 and the physical host, a result of processing the processing command by the acceleration resource to the physical host. The physical host returns the result of processing the processing command by the acceleration resource to the virtual machine, so that the access agent module on the physical host acts as the agent of the virtual machine to access the remote acceleration device, improving a service computing capability of the virtual machine. In this implementation, the virtual machine accesses the virtual device file for mapping the remote acceleration resource to the local acceleration resource. The physical host acts as the agent of the virtual machine to access the remote acceleration device, to implement network isolation between different virtual machines, and reduce network management load caused due to that in a public cloud scenario, a network on which a virtual machine runs is different from a network on which an acceleration resource runs.

In an implementation, an implementation in which the virtual machine sends the processing command and the identifier of the acceleration resource in the access request is: The virtual machine may store the processing command and the identifier of the acceleration resource in the access request to the storage space, and send a notification including the identifier of the acceleration resource to the access agent module, so that the access agent module obtains the processing command and the identifier of the acceleration resource in the access request from the storage space based on a predefined correspondence between the identifier of the acceleration resource and the storage space.

In another implementation, the virtual machine may send a notification including an address of the storage space to the access agent module. In this way, the access agent module may not obtain the processing command and the identifier of the acceleration resource in the access request from the storage space based on a predefined correspondence between the identifier of the acceleration resource and the storage space, but obtains the processing command and the identifier of the acceleration resource in the access request from the storage space based on the address of the storage space.

In another implementation, if the virtual machine sends the notification including the identifier of the acceleration resource to the access agent module, the virtual machine may not store the identifier of the acceleration resource in the access request to the storage space, to save a storage capacity of the storage space and improve utilization of the storage space. In another implementation, if the virtual machine sends the notification including the address of the storage space to the access agent module, the virtual machine may store the identifier of the acceleration resource in the access request to the storage space, to send the identifier of the acceleration resource in the access request to the access agent module.

Specifically, as shown in FIG. 1b, the cloud computing system 100 provided in this embodiment of this application is described by using an example in which there are two physical hosts, two virtual machines are deployed on one physical host, one virtual machine is deployed on the other physical host, either virtual machine on each physical host rents one acceleration resource, and the other virtual machine rents two acceleration resources. The two physical hosts are physical hosts 130a and 130b, two virtual machines on the physical host 130a are a virtual machine 130a1 and a virtual machine 130a2, and a virtual machine on the physical host 130b is a virtual machine 130b1. The virtual machine 130a1 on the physical host 130a rents two acceleration resources deployed in the remote acceleration system 110: the acceleration resource 111 and the acceleration resource 112. Two virtual device files that are respectively corresponding to the acceleration resource 111 and the acceleration resource 112 are created for the virtual machine 130a1 on the physical host 130a: a first virtual device file M10 and a second virtual device file M20. The virtual machine 130a2 on the physical host 130a rents an acceleration resource, namely, the acceleration resource 113, deployed in the remote acceleration system 110. A virtual device file, namely, a third virtual device file M30, corresponding to the acceleration resource 113 is created for the virtual machine 130a2 on the physical host 130a. In addition, the virtual machine 130b1 on the physical host 130b rents an acceleration resource, namely, an acceleration resource 114, deployed in the remote acceleration system 110. The virtual machine 130b1 on the physical host 130b includes a virtual device file, namely, a fourth virtual device file M40, corresponding to the acceleration resource 114. The physical host 130a includes a network adapter W1 and three access agent modules that are the access agent module D10, an access agent module D20, and an access agent module D30. The physical host 130b includes a network adapter W2 and an access agent module D40. Each access agent module shown in FIG. 1b may be loaded to a host operating system of a physical host to which the access agent module belongs, to run in the host operating system. In another implementation, the access agent module may alternatively run in a virtual machine monitor or on a virtualized platform provided by VMware.

In the cloud computing system 100 shown in FIG. 1b, the first virtual device file M10 is used to map the acceleration resource 111 that is rented by the virtual machine 130a1 and that is deployed in the remote acceleration system 110 to a local acceleration resource. The virtual machine 130a1 converts a resource invocation instruction for a remote acceleration device into an access request for a virtual device file on the virtual machine, and requests, by using the first virtual device file M10, to access the acceleration resource. The virtual machine 130a1 sends the access request to the access agent module D10. The access request includes a processing command and an identifier of the acceleration resource 111. The access agent module D10 sends the processing command and the identifier of the acceleration resource 111 to the remote acceleration system 110 by using the network adapter W1 of the physical host 130a.

In the cloud computing system 100 shown in FIG. 1b, another virtual device file excluding the first virtual device file M10, for example, the second virtual device file M20, the third virtual device file M30, or the fourth virtual device file M40, has a same function as the first virtual device file M10, and is used to map an acceleration resource rented by a virtual machine to which the second virtual device file M20, the third virtual device file M30, or the fourth virtual device file M40 belongs to a local acceleration resource. After the virtual machine requests, by using a virtual device file such as the second virtual device file M20, the third virtual device file M30, or the fourth virtual device file M40, to access a local acceleration resource obtained after mapping is performed by using the virtual device file, the virtual machine converts a resource invocation instruction for the remote acceleration device into an access request for the virtual device file, and sends the access request to an access agent module corresponding to the virtual device file. The access agent module sends a processing command and an identifier of the acceleration resource to the remote acceleration system 110 by using a network adapter of the physical host on which the access agent module is located, to implement accelerated processing of a service of the virtual machine.

In the cloud computing system 100 provided in this embodiment of this application, when the virtual machine accesses the acceleration resource rented by the virtual machine from the remote acceleration system 110, the virtual machine does not communicate with the remote acceleration system 110 by using a network, but converts information about the to-be-accessed remote acceleration resource, such as the processing command and the identifier of the acceleration resource in the resource invocation instruction, into the access request for the virtual device file on the virtual machine, and then sends the access request to the access agent module on the physical host. The access agent module on the physical host sends the information about the to-be-accessed remote acceleration resource to the remote acceleration system 110. In this way, network isolation between different virtual machines can be implemented, reducing network management load caused due to that in a public cloud scenario, a network on which a virtual machine runs is different from a network on which an acceleration resource runs, and reducing a network security risk of the virtual machines.

With reference to a structure of the cloud computing system 100 shown in FIG. 1b, the following describes in detail a method for accessing a remote acceleration device by a virtual machine according to an embodiment of this application.

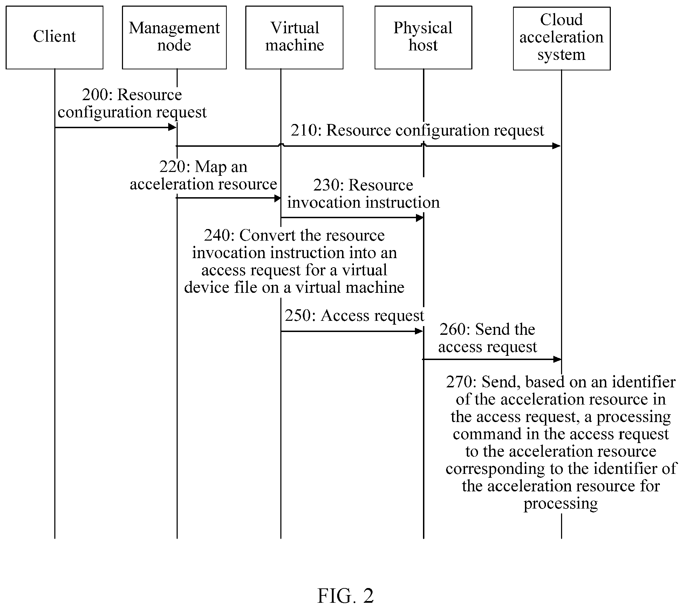

FIG. 2 is a schematic flowchart of a method for accessing a remote acceleration device by a virtual machine according to an embodiment of this application. The method is applied to the cloud computing system 100 shown in FIG. 1b, and includes steps 200 to 260. Steps 200 to 220 may be performed by the management node 120 configured to manage a cloud acceleration system. Steps 230 and 240 may be performed by a virtual machine. Step 250 may be performed by a physical host. Step 260 may be performed by the remote acceleration system 110. The method may be implemented by referring to the following steps 200 to 260.

200: The management node 120 receives a resource configuration request that is for an acceleration resource and that is sent by a user by using a client. For example, the client is the client C1 shown in FIG. 1b.

The user enters, on the client deployed on the virtual machine, a type and a quantity of acceleration resources that a tenant of the virtual machine needs to rent.

210: The management node 120 sends the resource configuration request to the remote acceleration system 110, where the resource configuration request includes an identifier of the virtual machine and a type and a quantity of acceleration resources that a tenant of the virtual machine needs to rent.

After receiving the resource configuration request, the remote acceleration system 110 configures, for the virtual machine, an acceleration resource corresponding to the type and the quantity of acceleration resources, and returns a configuration success message to the management node 120. After receiving the configuration success message, the management node 120 creates an identifier of the acceleration resource, and stores a correspondence between the identifier of the virtual machine and the identifier of the acceleration resource.

After the management node 120 receives the configuration success message, the management node 120 maps the acceleration resource configured for the virtual machine by the remote acceleration system 110 to the virtual machine. For specific implementation, refer to the following step 220.

220: The management node 120 maps the acceleration resource to the virtual machine.

After the remote acceleration system 110 configures, for the virtual machine, the acceleration resource corresponding to the type and the quantity of acceleration resources, the management node 120 maps the acceleration resource to the virtual machine. A specific implementation is: The management node 120 sends a response message of the resource configuration request to a physical host on which the virtual machine is located. An access agent module on the physical host obtains the response message of the resource configuration request. The response message carries information about the remote acceleration device that is sent by the remote acceleration system 110 to the virtual machine in response to the resource configuration request sent by the virtual machine. The information about the remote acceleration device includes an identifier and network connection information of the to-be-accessed remote acceleration device.

The identifier of the remote acceleration device may include identifiers respectively corresponding to several hardware acceleration apparatuses. The several hardware acceleration apparatuses are acceleration resources configured for the virtual machine by the remote acceleration system 110 in response to the resource configuration request sent by the virtual machine. The network connection information is used for establishing a network connection between the physical host and the remote acceleration system 110.

The network connection information includes a network address and a network port number of the remote acceleration system 110. The network address of the remote acceleration system 110 is a network address that complies with a network communication protocol, and may be specifically an IP address or a Media Access Control (MAC, Media Access Control) address that complies with the Internet Protocol (Internet Protocol, IP). The MAC address is used to uniquely identify a network adapter on a network.

After the physical host obtains the response message of the resource configuration request, the virtual machine determines whether the remote acceleration device has been allocated to the virtual machine, and creates a virtual device file if the remote acceleration device has been allocated to the virtual machine, where the virtual device file is corresponding to the remote acceleration device. That the virtual machine determines whether the remote acceleration device has been allocated to the virtual machine includes: periodically initiating, by the virtual machine, a query to the access agent module on the physical host, to determine whether the remote acceleration device has been allocated to the virtual machine; or after obtaining the response message of the resource configuration request, notifying, by the access agent module on the physical host, the virtual machine that the remote acceleration device has been allocated.

In the method for accessing a remote acceleration device by a virtual machine according to this embodiment of this application, when the virtual machine accesses the acceleration resource rented by the virtual machine from the remote acceleration system 110, the virtual machine does not communicate with the remote acceleration system 110 by using the network, but converts the information, such as a processing command and an identifier of the acceleration resource in a resource invocation instruction, about the to-be-accessed remote acceleration resource into an access request for the virtual device file on the virtual machine, and sends the access request to the access agent module on the physical host. The access agent module on the physical host sends the information about the to-be-accessed remote acceleration resource to the remote acceleration system 110. In this way, the physical host acts as an agent of the virtual machine to access the remote acceleration resource, remotely implementing network isolation between a plurality of virtual machines, and reducing a network security risk of the virtual machines.

After the acceleration resource is allocated to the virtual machine, if the user needs to access the remote acceleration resource, the following steps 230 to 270 are sequentially performed, to implement that the user accesses the remote acceleration resource by using the virtual machine.

230: The virtual machine receives a resource invocation instruction sent by the user by using the client deployed on the virtual machine. The resource invocation instruction includes an identifier of the acceleration resource and a processing command. The acceleration resource is an acceleration resource provided by the remote acceleration system 110 to the virtual machine for use. The processing command is used to instruct the acceleration resource corresponding to the identifier of the acceleration resource to perform accelerated computing processing.

240: The virtual machine converts the resource invocation instruction into an access request for a virtual device file on the virtual machine.

As shown in FIG. 1b, each virtual machine includes a virtual device file that is of a remote acceleration device and that is corresponding to the remote acceleration device. For example, the virtual machine 130a1 includes the first virtual device file M10 corresponding to the acceleration resource 111. The virtual device file is used to map the acceleration resource that is rented by the virtual machine and that is deployed in the remote acceleration system 110 to a local acceleration resource. In this way, after obtaining the resource invocation instruction for the remote acceleration device, the virtual machine converts the resource invocation instruction into the access request for the virtual device file on the virtual machine, to access the local acceleration resource on the virtual machine to which the acceleration resource in the access remote acceleration system 110 is mapped.

250: The virtual machine transmits the access request to an access agent module on the physical host. The access request includes the identifier of the to-be-accessed acceleration resource determined by the virtual machine in several acceleration resources rented from the remote acceleration system 110, and the processing command.

In an implementation, an implementation in which the virtual machine sends the processing command and the identifier of the acceleration resource in the access request is: The virtual machine may store the processing command and the identifier of the acceleration resource in the access request to the storage space, and send a notification including the identifier of the acceleration resource to the access agent module, so that the access agent module obtains the processing command and the identifier of the acceleration resource in the access request from the storage space based on a predefined correspondence between the identifier of the acceleration resource and the storage space.

In another implementation, the virtual machine may send a notification including an address of the storage space to the access agent module. In this way, the access agent module may not obtain the processing command and the identifier of the acceleration resource in the access request from the storage space based on a predefined correspondence between the identifier of the acceleration resource and the storage space, but obtains the processing command and the identifier of the acceleration resource in the access request from the storage space based on the address of the storage space.

In another implementation, if the virtual machine sends the notification including the identifier of the acceleration resource to the access agent module, the virtual machine may not store the identifier of the acceleration resource in the access request to the storage space, to save a storage capacity of the storage space and improve utilization of the storage space. In another implementation, if the virtual machine sends the notification including the address of the storage space to the access agent module, the virtual machine may store the identifier of the acceleration resource in the access request to the storage space, to send the identifier of the acceleration resource in the access request to the access agent module.

Before the virtual machine sends the processing command to the physical host, or before the virtual machine sends the processing command and the identifier of the acceleration resource to the physical host, the virtual machine first needs to confirm the storage space shared by the virtual machine and the physical host. There are two implementations in which the virtual machine confirms the storage space shared by the virtual machine and the physical host. A first implementation is: The virtual machine confirms the storage space based on the pre-stored correspondence between the identifier of the acceleration resource and the storage space. In this implementation, the correspondence between the identifier of the acceleration resource and the storage space may be a correspondence between the identifier of the acceleration resource and the address of the storage space. A second implementation is: The virtual machine searches, based on the identifier of the acceleration resource, for a virtual device file corresponding to the identifier of the acceleration resource, where the virtual device file is used to store the correspondence between the identifier of the acceleration resource and the storage space. The virtual machine confirms, based on the correspondence that is between the identifier of the acceleration resource and the storage space and that is stored in the virtual device file, the storage space corresponding to the identifier of the acceleration resource.

260: The access agent module on the physical host sends the access request to the remote acceleration device by using a communication connection between the access agent module and the remote acceleration device.

That the access agent module on the physical host sends the access request to the remote acceleration device by using a communication connection between the access agent module and the remote acceleration device includes:
encapsulating, by the physical host, the identifier of the acceleration resource and the processing command in the access request, to obtain a request for accessing the acceleration resource, where the request for accessing the acceleration resource includes the identifier of the acceleration resource and the processing command; and sending, by the physical host, the request for accessing the acceleration resource to the remote acceleration system 110.

The request, sent by the physical host, for accessing the acceleration resource is included in a data packet. The data packet further includes the network connection information.

270: The remote acceleration system 110 sends, based on the identifier of the acceleration resource, the processing command to the acceleration resource corresponding to the identifier of the acceleration resource for processing.

In the method for accessing a remote acceleration device by a virtual machine according to this embodiment of this application, when the virtual machine accesses the acceleration resource rented by the virtual machine from the remote acceleration system 110, the virtual machine does not communicate with the remote acceleration system 110 by using the network, but converts the information, such as the processing command and the identifier of the acceleration resource in the resource invocation instruction, about the to-be-accessed remote acceleration resource into the access request for the virtual device file on the virtual machine, and sends the access request to the access agent module on the physical host. The physical host sends the information about the to-be-accessed remote acceleration resource to the remote acceleration system 110. In this way, network isolation between different virtual machines can be implemented. In this embodiment of this application, network isolation between a plurality of virtual machines can be implemented. Therefore, if some virtual machines that access the network are under a network attack, another virtual machine that normally works and that accesses the same network as the attacked virtual machines do can be prevented from being attacked by using the network, reducing a network security risk of the virtual machines.

Based on the method for accessing a remote acceleration device by a virtual machine shown in FIG. 2, before step 230, the virtual machine sends a channel establishment instruction to the access agent module, and the virtual machine establishes a communication connection to the access agent module. After receiving the channel establishment instruction, the access agent module establishes the communication connection between the access agent module and the remote acceleration device based on the network connection information of the remote acceleration device. In this implementation, that the virtual machine establishes a communication connection to the access agent module includes: obtaining, by the virtual machine, a part of storage space on the physical host, where the storage space is shared by the virtual machine and the access agent module. In an implementation, the storage space may be storage space that is corresponding to a mapped acceleration resource and that is predefined between the virtual machine and the physical host. The virtual device file created by the virtual machine may be used to store a correspondence between an identifier of the acceleration resource and the storage space. The virtual machine may store a correspondence between the identifier of the acceleration resource and the virtual device file, so that when the correspondence between the identifier of the acceleration resource and the storage space is to be subsequently used, the virtual device file can be found based on the correspondence between the identifier of the acceleration resource and the virtual device file, and the correspondence between the identifier of the acceleration resource and the storage space can be found. In this implementation, the correspondence between the identifier of the acceleration resource and the storage space may be a correspondence between the identifier of the acceleration resource and an address of the storage space.

Based on the method for accessing a remote acceleration device by a virtual machine shown in FIG. 2, in step 220, after the physical host obtains the response message of the resource configuration request, the virtual machine determines whether the remote acceleration device has been allocated to the virtual machine, and creates the virtual device file if the remote acceleration device has been allocated to the virtual machine. After creating the virtual device file, the virtual machine may store attribute information of the acceleration resource to the virtual device file. The response message of the resource configuration request includes the attribute information of the acceleration resource. In this way, when subsequently having a requirement for searching for the attribute information of the acceleration resource, the virtual machine can find the attribute information of the acceleration resource by using the virtual device file.

After the attribute information of the acceleration resource is stored by using the virtual device file, a specific implementation in which the virtual machine searches for the attribute information of the acceleration resource is: The virtual machine receives an attribute query request, where the attribute query request includes the identifier of the acceleration resource. The virtual machine queries the virtual device file based on the identifier of the acceleration resource, to obtain the attribute information of the acceleration resource. The attribute information of the physical acceleration resource includes attribute information of acceleration hardware included in the physical acceleration resource. The attribute information of the acceleration hardware includes a type, an identifier, or a use status of the acceleration hardware.

After receiving the identifier of the acceleration resource and the network connection information in the information about the remote acceleration device, the access agent module stores a correspondence between the network connection information and the identifier of the acceleration resource. That the physical host stores the correspondence between the network connection information and the identifier of the acceleration resource includes: creating, by the physical host, a network device file to which the acceleration resource is mapped on the physical host, storing the network connection information to the network device file, and storing a correspondence between the identifier of the acceleration resource and the network device file.

The virtual machine sends the channel establishment instruction to the access agent module. The channel establishment instruction includes the identifier of the acceleration resource. The physical host searches for the network connection information based on the identifier of the acceleration resource, and establishes a communication connection relationship with the remote acceleration system 110 based on the network connection information. If the network connection information is stored by using the network device file, that the physical host searches for the network connection information based on the identifier of the acceleration resource includes: searching, by the physical host, for the network device file based on the identifier of the acceleration resource, to obtain the network connection information.

After step 220, to be specific, after the management node 120 maps the acceleration resource to the virtual machine, if a user of the virtual machine has a requirement for deleting the acceleration resource, the user instructs, by using the client, the management node 120 to delete the acceleration resource. After logging in to the client, a client user may determine a to-be-deleted acceleration resource by using information that is about an acceleration resource corresponding to a virtual machine and that is presented on a client interface. The information about the acceleration resource corresponding to the virtual machine includes an identifier of an acceleration resource and/or a quantity of acceleration resources and/or a type of an acceleration resource, where the acceleration resource and the acceleration resources have been allocated to the virtual machine. The client user enters a deletion request for the to-be-deleted acceleration resource based on the information about the acceleration resource corresponding to the virtual machine. After receiving the deletion request for the to-be-deleted acceleration resource, the client sends an acceleration resource deletion instruction to the management node 120. The management node 120 receives the acceleration resource deletion instruction sent by the client, and deletes the acceleration resource that the user of the virtual machine needs to delete. The acceleration resource deletion instruction includes the identifier of the virtual machine and an identifier of the to-be-deleted acceleration resource. In another implementation, the acceleration resource deletion instruction may further include a quantity of to-be-deleted acceleration resources and/or a type of the to-be-deleted acceleration resource.

An implementation in which the management node 120 deletes the acceleration resource is: The management node 120 deletes a correspondence between the identifier of the virtual machine and the identifier of the to-be-deleted acceleration resource based on the acceleration resource deletion instruction.

After receiving the acceleration resource deletion instruction sent by the client, the management node 120 may further instruct the virtual machine to disconnect a communication connection that is between the virtual machine and the access agent module and that is established by the virtual machine when the virtual machine accesses the to-be-deleted acceleration resource in the remote acceleration system 110. A specific implementation in which the management node 120 instructs the virtual machine to disconnect the communication connection between the virtual machine and the access agent module when the virtual machine accesses the to-be-deleted acceleration resource in the remote acceleration system 110 is: The management node 120 sends a communication channel disconnection instruction to the physical host, where the communication channel disconnection instruction includes the identifier of the virtual machine and the identifier of the to-be-deleted the acceleration resource. After receiving the communication channel disconnection instruction, the physical host sends the communication channel disconnection instruction to the virtual machine, and the virtual machine disconnects the communication connection that is between the virtual machine and the access agent module and that is used by the virtual machine when the virtual machine accesses the to-be-deleted acceleration resource in the remote acceleration system 110. When disconnecting the communication connection between the virtual machine and the access agent module, the virtual machine deletes a mapping relationship between the identifier of the to-be-deleted acceleration resource and the address of the storage space. In this way, the virtual machine cannot use the communication connection between the virtual machine and the access agent module on the physical host, that is, cannot use the storage space that is shared by the physical host and the virtual machine and that is corresponding to the identifier of the to-be-deleted acceleration resource, to access the to-be-deleted acceleration resource.

In a specific implementation, if the mapping relationship between the identifier of the to-be-deleted acceleration resource and the address of the storage space is stored in the virtual device file, after the virtual machine receives an instruction that is for deleting the mapping relationship and that is sent by the physical host, the virtual machine may delete the virtual device file corresponding to the identifier of the to-be-deleted acceleration resource, to delete the mapping relationship that is between the identifier of the to-be-deleted acceleration resource and the address of the storage space and that is in the virtual device file.

After disconnecting the communication connection between the virtual machine and the access agent module on the physical host, the virtual machine may send communication channel disconnection information to the physical host, where the communication channel disconnection information is used to instruct the physical host to delete a network device file, to instruct the physical host to disconnect a communication connection that is between the physical host and the remote acceleration system 110 and that is used by the virtual machine when the virtual machine accesses the acceleration resource in the remote acceleration system 110.

In another implementation, the physical host may delete the network device file after receiving the communication channel disconnection instruction sent by the management node 120, and does not need to wait for the virtual machine to send the communication channel disconnection information to the physical host.

In another implementation, when the virtual machine disconnects a communication connection that is used by the virtual machine when the virtual machine accesses the to-be-deleted acceleration resource in the remote acceleration system 110, the virtual machine may disconnect either of two communication connections or two communication connections, where the two communication connections are the communication connection between the virtual machine corresponding to the to-be-deleted acceleration resource and the access agent module on the physical host, and the communication connection between the physical host corresponding to the to-be-deleted acceleration resource and the remote acceleration system 110.

In the several embodiments provided in this application, it should be understood that the disclosed system, device, and method may be implemented in other manners. For example, the described apparatus embodiment is merely an example. For example, the module division is merely logical function division and may be other division in implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in an electrical form, a mechanical form, or another form.

The modules described as separate parts may or may not be physically separate, and parts displayed as modules may or may not be physical modules, that is, may be located in one position, or may be distributed on a plurality of network modules. Some or all of the modules may be selected according to actual needs to achieve the objectives of the solutions of the embodiments.

In addition, functional modules in the embodiments of this application may be integrated into one processing module, or each of the modules may exist alone physically, or two or more modules may be integrated into one module. The integrated module may be implemented in a form of hardware, or may be implemented in a form of hardware in addition to a software functional module.

When the foregoing integrated module is implemented in a form of a software functional module, the integrated unit may be stored in a computer-readable storage medium. The software functional module is stored in a storage medium and includes several instructions for instructing a computer device (which may be a personal computer, a server, a network device, or the like) to perform some of the steps of the methods described in the embodiments of this application. The foregoing storage medium includes: any medium that can store program code, such as a removable hard disk, a read-only memory, a random access memory, a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in the embodiments of this application.

## Claims

1. A method for accessing a remote acceleration device by a virtual machine, wherein the virtual machine is deployed on a physical host, an access agent module is further deployed on the physical host, and the method comprises:
obtaining, by the virtual machine, a resource invocation instruction for the remote acceleration device;
converting, by the virtual machine, the resource invocation instruction into an access request for a virtual device file on the virtual machine;
transmitting, by the virtual machine, the access request to the access agent module; and
sending, by the access agent module, the access request to the remote acceleration device by using a communication connection between the access agent module and the remote acceleration device.

2. The method according to claim 1, wherein before the obtaining, by the virtual machine, a resource invocation instruction, the method further comprises:
sending, by the virtual machine, a resource configuration request for the remote acceleration device;
obtaining, by the access agent module, a response message of the resource configuration request, wherein the response message carries information about the remote acceleration device allocated by a remote acceleration system, and the information about the remote acceleration device comprises an identifier and network connection information of the remote acceleration device; and
determining, by the virtual machine, whether the remote acceleration device has been allocated to the virtual machine, and creating the virtual device file when the remote acceleration device has been allocated to the virtual machine, wherein the virtual device file is corresponding to the remote acceleration device.

3. The method according to claim 2, wherein the determining, by the virtual machine, whether the remote acceleration device has been allocated to the virtual machine comprises:
periodically initiating, by the virtual machine, a query to the access agent module, to determine whether the remote acceleration device has been allocated to the virtual machine; or after obtaining the response message of the resource configuration request, notifying, by the access agent module, the virtual machine that the remote acceleration device has been allocated.

4. The method according to claim 2 or 3, wherein before the obtaining, by the virtual machine, a resource invocation instruction, the method further comprises:
sending, by the virtual machine, a channel establishment instruction to the access agent module; and
after receiving the channel establishment instruction, establishing, by the access agent module, the communication connection between the access agent module and the remote acceleration device based on the network connection information of the remote acceleration device.

5. The method according to any one of claims 1 to 4, wherein before the obtaining, by the virtual machine, a resource invocation instruction, the method further comprises:
establishing, by the virtual machine, a communication connection to the access agent module.

6. The method according to claim 5, wherein the establishing, by the virtual machine, a communication connection to the access agent module comprises:
obtaining a part of storage space on the physical host, wherein the storage space is shared by the virtual machine and the access agent module; and
the transmitting, by the virtual machine, the access request to the access agent module comprises: writing, by the virtual machine, the access request into the storage space, wherein the access agent module reads the access request from the storage space.

7. A computer system, wherein the computer system comprises a virtual machine and an access agent module, and the virtual machine and the access agent module are deployed on a physical host;
the virtual machine is configured to: obtain a resource invocation instruction for a remote acceleration device, convert the resource invocation instruction into an access request for a virtual device file on the virtual machine, and transmit the access request to the access agent module; and
the access agent module is configured to send the access request to the remote acceleration device by using a communication connection between the access agent module and the remote acceleration device.

8. The system according to claim 7, wherein
the virtual machine is further configured to send a resource configuration request for the remote acceleration device;
the access agent module is further configured to obtain a response message of the resource configuration request, wherein the response message carries information about the remote acceleration device allocated by a remote acceleration system, and the information about the remote acceleration device comprises an identifier and network connection information of the remote acceleration device; and
the virtual machine is further configured to: determine whether the remote acceleration device has been allocated to the virtual machine, and create the virtual device file if the remote acceleration device has been allocated to the virtual machine, wherein the virtual device file is corresponding to the remote acceleration device.

9. The system according to claim 8, wherein the virtual machine is further configured to periodically initiate a query to the access agent module, to determine whether the remote acceleration device has been allocated to the virtual machine.

10. The system according to claim 8, wherein the access agent module is further configured to: after obtaining the response message of the resource configuration request, notify the virtual machine that the remote acceleration device has been allocated.

11. The system according to any one of claims 8 and 9, wherein
the virtual machine is further configured to send a channel establishment instruction to the access agent module; and
the access agent module is further configured to: after receiving the channel establishment instruction, establish the communication connection between the access agent module and the remote acceleration device based on the network connection information of the remote acceleration device.

12. The system according to any one of claims 7 to 11, wherein the virtual machine is further configured to establish a communication connection between the virtual machine and the access agent module.

13. The system according to claim 12, wherein the virtual machine is further configured to obtain a part of storage space on the physical host, wherein the storage space is shared by the virtual machine and the access agent module;
the virtual machine is further configured to write the access request into the storage space; and
the access agent module is further configured to read the access request from the storage space.

14. A computer readable storage medium, wherein the computer readable storage medium stores a computer program instruction, and when the computer program instruction runs on a computer, the computer performs the method according to any one of claims 1 to 6.
